Europäisches Patentamt

European Patent Office

Office européen des brevets

(19)

(11) Publication number:

**0 360 447**
**A2**

## (12) EUROPEAN PATENT APPLICATION

(21) Application number: 89308918.5

(22) Date of filing: 04.09.89

(51) Int. Cl.⁵: **B27K 5/00 , B27K 7/00 , C09K 17/00**

(30) Priority: 19.09.88 GB 8821976

(43) Date of publication of application:
28.03.90 Bulletin 90/13

(84) Designated Contracting States:
BE DE ES FR NL SE

(71) Applicant: CAMLAND PRODUCTS LIMITED
Fordham House
Fordham Cambridgeshire CB7 5LN(GB)

(72) Inventor: Dawson, Catherine Sara
6 Aylestone Road
Cambridge CB4 1HF(GB)
Inventor: Mann, Edna Joyce
59 Beechwood Avenue
Bottisham Cambridgeshire(GB)
Inventor: Watts, Peter David
Cherrytrees Houghton Hill
Huntingdon Cambridgeshire PE17 2BS(GB)

(74) Representative: Perry, Robert Edward et al
GILL JENNINGS & EVERY 53-64 Chancery
Lane
London WC2A 1HN(GB)

(54) Bark treatment.

(57) A method of treating comminuted bark for horticultural use, comprises subjecting the comminuted bark to microwave radiation. For example, the radiation is conducted under conditions which stimulate the action of naturally-occurring thermophilic organisms in the bark and/or under conditions such that harmful pests are killed.

EP 0 360 447 A2

## BARK TREATMENT

This invention relates to the treatment of bark, especially bark intended for horticultural use.

Although once considered as a waste by-product of forestry, bark (after suitable preparation) is increasingly widely used in horticulture, particularly as a mulch.

Fresh bark can contain toxins which make it unacceptable for immediate use as a growth medium. Its pH and particle size may also be unsuitable.

Another problem associated with the use of bark in horticulture without suitable preparation lies in the likelihood of transference of pests and diseases from contaminated to non-contaminated locations. In the UK at least, therefore, restrictions are imposed on the transport of bark from areas of specific infestation. By way of example, the UK Forestry Commission prohibits the landing of the following pests found in conifer wood (Coniferae) if carried on or infecting certain trees or wood: Scolytidae (bark beetles of conifers), Dendroctonus micans Kugelmann (the Great Spruce bark beetle), Ips amitinus Eichhoff (the smaller eight-toothed spruce bark beetle), Ips duplicatus Sahlb. (the northern spruce bark beetle) and Ips typographus - (the larger eight-toothed bark beetle). Another related pest is Ips sexdentatus (the six-toothed bark beetle).

It has been proposed that bark should be pulverised in order to kill undesirable pests, before transportation, but this is not necessarily effective. In any event, there remains the problem of re-infestation immediately after pulverisation and before and during transportation.

A known process for the treatment of bark, in order to make it suitable for use as a growth medium, comprises forming it into heaps, if necessary after comminution. Given the right conditions, the temperature in the heap will rise as naturally-occurring organisms cause fermentation of nutrient sources in situ. The heat renders harmless undesirable toxins, whereupon the bark can be packaged, transported and used for general horticultural purposes. This process does not meet all the problems described above, but the greatest inherent disadvantage is the fact that the heap of bark must be left for an extended period, e.g. 2-3 or even more months. For the continuous production of bark suitable.for use as a growth medium, considerable storage space is therefore necessary. Further, large, expensive machinery can be employed, to turn the heaps intermittently.

It is known to treat flour, by microwave radiation, in order to kill undesirable pests. Microwave apparatus for such treatment is commercially available.

According to the present invention, comminuted bark is radiated, e.g. using a conventional microwave apparatus, under controlled conditions. There are two specific purposes of such treatment.

According to one aspect of the invention, the comminuted bark is radiated in order to stimulate the action of the naturally-occurring thermophilic organisms. For this purpose, a temperature of 40-80°C, e.g. 55°C may be appropriate. This process can have one or more advantages, i.e. reducing (to 4 or perhaps 2 weeks) or obviating the time required for storage in heaps, therefore reducing the storage space required for continuous production of treated bark; avoiding the need for machinery to turn the heaps; and changing the demands for comminution of the bark (if appropriate), since thermophilic activity will cause some degradation, and also a desirable reduction in pH.

According to another aspect of the invention, the comminuted bark is radiated in order to kill undesirable pests. For this purpose, a temperature of 50-90°C, e.g. 70°C is appropriate. This process is suitably conducted whilst the bark is contained in bags or other containers of a microwave radiation-stable material.

The two aspects of the invention may be used in the production process, depending on the exact conditions and the nature of the raw material. The respective advantages may be combined. This overall process provides bark in a transportable form, ready for use, without the need for control or further treatment. Reinfestation is prevented.

It has been found that the radiated bark is not only hot, but can remain hot for some considerable time. This can provide conditions analogous to those which are achieved by the action of thermophilic organisms in otherwise untreated heaps of bark, as described above, but more quickly. Depending on the effect of the maintenance of heat in containers of radiated bark, it may be necessary to allow materials generated in situ to escape from the container, or perhaps to "re-package". It is also quite possible that no such provisions are necessary, depending on the conditions of treatment and the nature of the starting material.

Typically, the bark will be from coniferous, e.g. maritime pine or spruce trees. As indicated, it is treated in comminuted form, primarily in order to allow continuous through-put, during radiation, and to provide a product which can then be ready for immediate use. Comminution may be to relatively small particle sizes, or the treated product may be comminuted further or pulverised. The actual use to which the treated product may be put is not defined at this stage, but may depend on various factors, such as the pH of the product.

The following Example illustrates the efficacy of microwave radiation of bark. The tests indicate how radiation may be conducted, for the general purposes of this invention, although the results concentrate on the effect on undesirable pests.

Example

In the tests, microwave apparatus was used, viz. a Magnetronics system with maximum microwave output of 60 kW and variable belt speed for passing material through the central chamber. Steam was also added to the chamber, thus adding to the heating effect.

Bark beetles are more likely to survive in larger fragments of bark; therefore, the bulk of the trial was concerned with bark particles 12 to 35 mm in size, which are easily capable of harbouring adult beetles. In order to make the trial as realistic as possible, specimens of the six-toothed bark beetle, Ips sexdentatus, were used as the main test insect. This beetle has adults in the size range 5.5-8 mm and approximates to Dendroctonus micans and, to a lesser extend, Ips typographus. A few specimens of the smaller (3.5-5 mm) pattern engraver beetle, Orthotomicus laricis, were used in the final stages of the trial. The flour beetle, Tribolium castaneum, which is rather more tolerant of high temperatures than the bark beetles, was used in all tests as a further check on efficacy.

In each test, sacks of bark were half emptied, and specimens of the test insects (five adult I. sexdentatus and at least 10 adult T. castaneum) were placed, with a small quantity of the bark, into muslin or plastic bags and then carefully located in the centre and at the edges of the bark sacks. The test sacks were then passed through the microwave apparatus at a pre-set belt speed designed to generate specific temperatures. The sacks were opened immediately after removal from the microwave apparatus, and all test insects were examined to determine whether they had survived. Tests were repeated at a range of belt speeds and hence temperatures, to determine the fastest speed, and therefore lowest temperature, that would give 100% kill of all the test insects. Tests were also carried out with raw spruce bark (fragments up to 150 mm long) and 100-grade bark (12 mm screen size), once the results using 12-35 mm size particles were shown to be satisfactory.

The results of the seven test runs are presented in the following Table. Data on the belt speeds, rate of throughput and range of temepratures achieved are also included. Differential mortality between the various test insect species and in the positions within the bark sacks is indicated. All trials were carried out at 60 kW.

Table

| Belt Speed | Rate (s/m) | Bark Type | Temp (°C) | Insect Mortality (%) |
|---|---|---|---|---|
| 240 | 105 | 12-35 mm | 92-96 | 100 |
| 240 | 105 | Raw spruce | 95-97 | 100 |
| 600 | 48 | 12-35 mm | 55-70 | 100(centre) 0(edge) |
| 370 | 79 | 12-35 mm | 58-84 | 100(Ips) 27(Tribolium) |
| 310 | 93 | 12-35 mm | 60-89 | 100 |
| 310 | 93 | 0-12 mm | 60-90 | 100 |
| 310 | 93 | Raw spruce | 85-90 | 100 |

It is clear from these results that 100% mortality can be achieved using the microwave process.

The question of which belt speed setting to use in order to maintain 100% kill, while allowing the fastest safe through-put of sacks, has also been satisfactorily answered. The run giving 100% mortality of the two Ips species, but only 27% mortality of Tribolium castaneum, is obviously just on the margin of safety. The slightly lower speed used in runs 5 to 7 achieved 100% mortality for the three bark types tested, and would appear to provide the necessary safety margin for large-scale use. A further consideration in providing confidence in the method is the much longer period of high temperature in unopened bags that will be normal during commercial use.

On the basis of the above trial, for microwaving to be used on a commercial scale, a belt speed of not more than 310 (93 s/m) at a setting of 60 kW would be satisfactory. In addition, in order to provide a visual check that the process has been carried out, a temperature-sensitive strip or paint, to change colour at 70° C, could be incorporated into the bags.

## Claims

1. A method of treating comminuted bark for horticultural use, which comprises subjecting the comminuted bark to microwave radiation.

2. A method according to claim 1, in which the radiation is conducted under conditions which stimulate the action of naturally-occurring thermophilic organisms in the bark.

3. A method according to claim 1 or 2, in which the radiation is conducted under conditions such that harmful pests are killed.

4. A method according to any preceding claim, in which the bark is contained in bags or other containers of a microwave radiation-stable material.

5. A bag or other container of microwave radiation-stable material, containing comminuted conifer wood bark and killed pests selected from Scolytidae, Dendroctonus micans, Ips amitinus, Ips duplicatus, Ips typographus and Ips sexdentatus.